# FASCICULE DE BREVET EUROPEEN

(11) **EP 3 344 901 B1**
(45) Date de publication et mention de la délivrance du brevet: **05.06.2019**
(21) Numéro de dépôt: 16775762.4
(22) Date de dépôt: 02.09.2016
(51) Int. Cl.: F02C 7/28, F16J 15/44, F01D 11/12, F16J 15/447, F01D 11/02

(54) **TURBINE DE MOTEUR A TURBINE A GAZ COMPRENANT UN ÉLÉMENT DE JOINT D'ÉTANCHÉITÉ A LABYRINTHE**
TURBINE EINES GASTURBINENTRIEBWERKS MIT EINEM LABYRINTHDICHTUNGSVERBINDUNGSELEMENT
TURBINE OF GAS TURBINE ENGINE, INCLUDING A LABYRINTH SEALING JOINT ELEMENT

(30) Priorité: 02.09.2015 FR 1558118
(43) Date de publication de la demande: 11.07.2018
(73) Titulaire: Safran Aircraft Engines, 75015 Paris (FR)
(72) Inventeur: MASSOT, Aurélien, René-Pierre, 77550 Moissy Cramayel (FR); SCHWARTZ, Eric, 77550 Moissy Cramayel (FR); SCHWEBLEN, Wilfried, Lionel, 77550 Moissy Cramayel (FR)
(74) Mandataire: Gevers & Orès
(86) Numéro de dépôt international: PCT/FR2016/052171
(87) Numéro de publication internationale: WO 2017/037394

(56) Documents cités:
- EP-A1- 2 613 008
- EP-A2- 1 780 380
- EP-A2- 2 196 632
- WO-A1-98/26158
- US-A1- 2008 274 336

## Description

### Domaine de l'invention

La présente invention concerne le domaine des moteurs à turbine à gaz et plus particulièrement celui des éléments d'étanchéité statoriques utilisés dans les joints à labyrinthe entre les pièces mobiles et statoriques d'une turbine.

### Etat de la technique

Un moteur à turbine à gaz comprend, au niveau de la turbine par exemple, des joints d'étanchéité entre les extrémités radiales extérieures des aubes mobiles et la surface du stator balayée par les extrémités radiales extérieures de l'étage mobile ; il s'agit d'éviter qu'une partie du gaz moteur ne travaille pas en contournant l'étage de turbine. On utilise dans ce but des joints à labyrinthe. Ces joints comprennent un élément de joint solidaire du rotor, formé d'une ou plusieurs lames, désignées léchettes disposées radialement et transversalement par rapport à l'axe de rotation de la machine. Ils comprennent également un élément de stator complémentaire, en vis-à-vis des lames. Cet élément présente une portion de surface qui coopère avec les lames pour ménager un jeu aussi faible que possible. Plusieurs lames en parallèle induisent une succession de pertes de charge au flux de gaz qui contourne l'étage de turbine, assurant l'étanchéité souhaitée.

On dispose des tels joints à labyrinthe en plusieurs endroits du moteur, par exemple aussi entre l'arbre de la turbine et la base de l'étage statorique, formé d'ailettes de stator, entre deux étages mobiles successifs d'une turbine.

Les moteurs à turbine à gaz, en fonction de leurs conditions de fonctionnement, subissent des variations de dilatation différentielles entre en particulier les éléments du stator et ceux de rotor. Ces différences de variation si elles ne sont pas maîtrisées peuvent affecter les jeux entre les parties mobiles et fixes. C'est ainsi que pour un moteur de propulsion d'un aéronef subissant en vol une extinction de flamme dans la chambre de combustion pour une quelconque raison, l'ensemble de la turbine n'étant plus traversé par des gaz à haute température se refroidit. Cependant, le carter peut être amené à se refroidir plus rapidement que le rotor de turbine, avec un impact sur les jeux. Or pour avoir un rendement optimal, les jeux des joints à labyrinthe sont calculés pour, en fonctionnement, être aussi faibles que possible. Il s'ensuit un risque de blocage du rotor en raison du contact plus ou moins serré des léchettes avec le matériau abradable, dans une telle situation.

Les caractéristiques du joint à labyrinthe sont déterminées et ajustées pour permettre une variation de jeu et un éventuel faible contact pendant les différentes phases de vol, en fonctionnement normal, mais lorsque les variations dimensionnelles sont importantes, résultant d'un incident de cet ordre, le joint à labyrinthe ne peut plus remplir son rôle. Le rotor étant empêché de tourner, le redémarrage du moteur par autorotation du corps BP ou HP ou bien par entraînement par un moteur auxiliaire peut ne pas se produire de façon satisfaisante.

Pour éviter le serrage du rotor en cas d'une telle extinction de la chambre de combustion, il serait envisageable d'augmenter le jeu entre les léchettes et l'abradable. Cependant cette solution n'est pas viable économiquement en raison de la chute de performance du moteur qu'elle induirait.

EP 2613008 A1 divulgue une turbine de moteur à turbine à gaz selon le préambule de la revendication 1.

Le présent déposant s'est donc fixé comme objectif de mettre au point une solution qui permettrait de faire face à la situation d'une extinction intempestive de la chambre de combustion sans réduire les performances du moteur en fonctionnement normal.

### Exposé de l'invention

On parvient à cet objectif conformément à l'invention avec une turbine de moteur à turbine à gaz, comprenant un élément d'anneau d'étanchéité statorique agencé pour former un joint à labyrinthe en association avec au moins une léchette mobile en rotation autour de l'axe de l'anneau d'étanchéité, l'élément comprenant une couche en matériau abradable avec une portion de surface d'étanchéité apte à coopérer avec ladite léchette mobile.

Dans la turbine selon l'invention, la couche de matériau abradable sur ladite portion de surface comprend axialement une première zone avec une première résistance à la pénétration d'une léchette, ladite première zone correspondant à la position axiale de la léchette en fonctionnement nominal de la turbine, et une deuxième zone adjacente à la première zone avec une résistance à la pénétration d'une léchette réduite par rapport à la première zone, ladite deuxième zone étant située en aval par rapport à la première zone et correspondant à la position axiale que prend la léchette lorsqu'il se produit une extinction de flamme dans la chambre de combustion du moteur.

Le matériau abradable est un matériau qui est usé ou déformé au contact de la léchette en rotation, préférentiellement à cette dernière. Il peut s'agir d'un matériau en nid d'abeille.

L'élément d'anneau d'étanchéité peut être un secteur d'anneau d'étanchéité ou bien un anneau complet.

L'invention résulte de l'observation qu'en vol, le moteur, lorsqu'il n'est plus entraîné par les gaz moteur, se met en autorotation et subit la pression du vent relatif. De plus, en vol et lorsque le moteur n'est plus entraîné, les différences de dilatations axiale et radiale entre le carter et le rotor peuvent provoquer un blocage du rotor. Ce blocage peut en outre être favorisé par le déplacement, léger, des différents corps, BP et HP, vers l'aval, résultant de la pression du vent relatif précitée. Ce déplacement est mis à profit par l'invention pour réserver deux zones sur la portion de surface en vis-à-vis de la léchette. La première zone correspond à la position axiale de la léchette en fonctionnement normal de la machine ; le jeu entre la léchette et l'abradable est dans ce cas celui du fonctionnement optimal de la machine. La seconde zone est située en aval par rapport à la première et correspond à la position axiale que prend la léchette lorsqu'il se produit une extinction de flamme dans la chambre de combustion. Comme le jeu vient alors à se réduire jusqu'à être négatif, il importe de réduire les efforts de friction entre les deux parties mobiles relativement l'une par rapport à l'autre. On réduit ainsi voire on élimine les risques de serrage du rotor résultant de ce contact.

Ainsi, ladite au moins une léchette mobile est apte à se déplacer entre deux positions axiales, une première position correspondant à un fonctionnement normal (nominal) de la turbine, et une deuxième position, en aval de la première position, correspondant à la position axiale que prend la léchette lorsqu'il se produit une extinction de flamme dans la chambre de combustion. La couche de matériau abradable est configurée pour comprendre axialement ladite première zone, sur laquelle vient se positionner la léchette lorsqu'elle est dans sa première position axiale, et ladite deuxième zone, sur laquelle vient se positionner la léchette lorsqu'elle est dans sa deuxième position axiale.

Ladite deuxième zone peut comprendre au moins une cavité. La présence de cette cavité entraîne une résistance à la pénétration de la léchette réduite par rapport à la première zone. Ladite au moins une cavité peut être disposée dans l'épaisseur de la couche de matériau abradable et/ou déboucher à l'extérieur (axialement et/ou radialement) de la couche de matériau abradable.

Conformément à un premier mode de réalisation, ladite portion de surface de l'élément d'étanchéité statorique de turbine présente par rapport à l'axe (A) du moteur, un rayon constant le long des deux zones, et dans ladite deuxième zone adjacente à la première, l'épaisseur de la couche abradable est réduite. Cette zone d'épaisseur réduite cède à la pression de serrage et libère les léchettes des efforts de friction. Le serrage du rotor est évité.

Conformément à un mode de réalisation particulier, l'épaisseur de la couche abradable dans la deuxième zone est réduite à 50-95% de l'épaisseur de l'abradable dans la première zone. Avantageusement, la zone d'épaisseur réduite est comblée d'un matériau de résistance plus faible que celui de l'abradable.

Conformément à un autre mode de réalisation, la portion de surface le long de la première zone est cylindrique et tronconique le long de la deuxième zone.

L'invention trouve une première application où l'élément est agencé pour former un joint à labyrinthe en extrémité radiale extérieure des aubes mobiles d'une turbine, en particulier axiale.

L'invention trouve une autre application où l'élément est agencé pour former un joint à labyrinthe en extrémité radiale intérieure des aubes statoriques d'une turbine.

Dans un mode de réalisation, la turbine comporte un rotor et un stator, le rotor comprenant une pluralité d'aubes radiales pourvues à leur extrémité radialement extérieure d'un élément d'étanchéité rotorique avec au moins une léchette en forme de lame radiale, orientée radialement vers l'extérieur (elle peut être perpendiculaire à l'axe ou inclinée par rapport à cet axe, par exemple vers l'amont) par rapport à l'axe (A) de rotation du rotor, le stator formant l'enveloppe cylindrique à l'intérieur de laquelle les aubes du rotor sont mises en mouvement, le stator comprenant en vis-à-vis de ladite lame, un élément d'étanchéité statorique réalisé dans un matériau abradable et formant avec l'élément d'étanchéité rotorique un joint d'étanchéité à labyrinthe. Ledit élément d'étanchéité statorique forme un anneau d'étanchéité, ladite première zone correspondant au fonctionnement nominal de la turbine et ladite seconde zone correspondant au fonctionnement en phase de ré-allumage après une extinction de chambre de combustion du moteur.

Dans un mode de réalisation, la turbine comprend un étage formé d'ailettes statoriques, les dites ailettes comprenant du côté de l'axe (A) de la turbine un élément d'étanchéité coopérant avec au moins une léchette mobile en rotation pour former un joint à labyrinthe. Dans l'élément d'étanchéité, ladite première zone correspondant au fonctionnement nominal de la turbine et ladite seconde zone correspondant au fonctionnement en phase de ré-allumage après une extinction de chambre de combustion.

L'invention a également pour objet un moteur à turbine à gaz comprenant une turbine décrite ci-dessus. Elle a également pour objet une turbomachine comprenant un tel moteur à turbine à gaz.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.

Sur ces dessins :
La figure 1 représente schématiquement en coupe axiale partielle, un exemple de turbine d'un moteur à turbine à gaz auquel s'applique l'invention ;
La figure 2 montre le détail de la figure 1 se rapportant à un élément d'étanchéité statorique auquel s'applique l'invention ;
La figure 3 montre le détail de la figure 1 se rapportant à un autre élément d'étanchéité statorique auquel s'applique l'invention ;
La figure 4 montre un autre mode de réalisation de l'invention.

### Description de modes de réalisation de l'invention

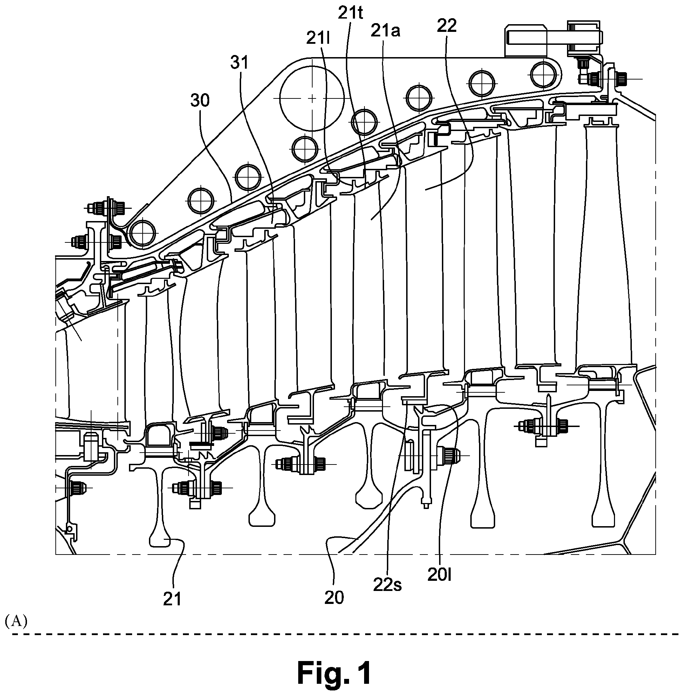

La figure 1 montre la turbine BP d'un moteur à turbine à gaz. La structure de cette turbine est en soi connue.

Cette turbine 1 est ici à quatre étages. Le rotor 20 de la turbine est formé dans cet exemple de quatre disques de turbine 21 boulonnés entre eux. Chaque disque 21 porte respectivement sur sa jante les aubes mobiles 21a. En extrémité radiale extérieure les aubes sont pourvues d'un talon 21t sur lequel sont ménagées des lames radiales 21l respectivement, tournées vers le stator 30. Sur l'exemple de la figure, chaque talon 21t supporte deux lames radiales formant les léchettes de joints à labyrinthe. En vis-à-vis des léchettes le stator comprend des éléments d'étanchéité 31 qui comme cela est en soi connu forment avec les léchettes sur les talons des joints à labyrinthe. Les deux joints à labyrinthe sont selon cet exemple sur deux rayons différents par rapport à l'axe (A) de la machine.

On trouve également des joints à labyrinthe sur l'extrémité radiale intérieure des roues d'aubes de stator inter étages 22. L'élément de joint statorique 22s est un anneau en deux moitiés par exemple. Les léchettes 20l sont portées par les extensions latérales des disques de turbine 21 reliant ces derniers par boulonnage.

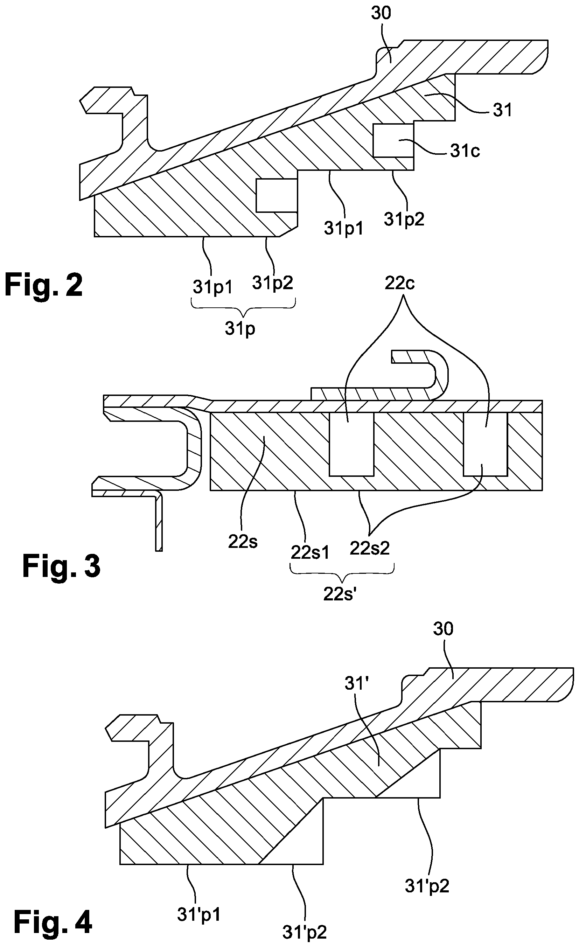

L'invention est décrite maintenant en relation avec les figures 2 à 6. La figure 2 montre le détail de l'un des éléments 31 d'étanchéité statoriques. Cet élément 31 est un secteur d'anneau ; il comprend dans cet exemple deux portions de surface 31p agencées pour coopérer chacune avec une léchette 21l du talon 21t de l'aube de l'étage considéré. Chaque portion de surface 31p comprend une première zone 31p1 et une deuxième zone 31p2. La première zone 31p1 est à l'amont de la zone 31p2 et coopère avec une léchette 21l du talon 21t. Cette première zone 31p1 correspond à la position axiale de la léchette 21l en fonctionnement normal de la machine. Le jeu entre la léchette 21l et l'abradable de l'élément d'étanchéité 31 est maîtrisé. En fonctionnement normal du moteur à turbine à gaz, le joint à labyrinthe ne subit pas de détérioration sensible, les écarts de température sont maîtrisés, les écarts de dilatation entre les parties mobiles et les parties de stator, n'affectent pas la surface du matériau abradable.

Dans la deuxième zone 31p2, située en aval de la première, l'épaisseur de la couche d'abradable est réduite. Une cavité 31c est creusée dans le matériau pour l'affaiblir. La réduction peut consister sur un élément d'étanchéité existant en un usinage dans l'épaisseur de la couche recouvrant l'élément d'étanchéité ; cette zone correspond à la position axiale de la léchette au cours d'un fonctionnement extrême du moteur où la chambre de combustion est éteinte en vol ; le rotor est susceptible d'être serré par l'élément statorique. En effet, lorsque la chambre de combustion s'éteint pour une raison non souhaitée, les rotors ne sont plus parcourus par des gaz moteurs et ils subissent la pression de l'air entrant dans le moteur. Dans cette situation, les rotors subissent un déplacement axial vers l'aval. Du refroidissement différentiel entre le rotor et le stator, Il s'ensuit que si le stator vient à se refroidir rapidement et se rétracter, les extrémités des léchettes pénètrent dans le matériau dont la résistance est réduite à cause de la cavité 31c. Aucun risque de blocage du rotor n'est alors à craindre de la solution de l'invention car les matériaux sont adaptés.

La solution de la figure 4 se rapporte à une variante. L'élément d'étanchéité 31' présente sur la portion de surface 31'p en vis-à-vis des léchettes deux zones également 31'p1 et 31'p2. La solution a consisté à tailler en biseau la seconde zone de la portion de surface concernée par le joint d'étanchéité.

La figure 3 montre l'application de l'invention à l'étanchéité entre l'extrémité 22s radiale interne du disque de stator inter-étage. Sur cet élément, des cavités 22c ont été usinées dans le matériau abradable de façon à y créer sur la deuxième zone, une faible résistance à la pénétration par la léchette correspondante 20l.

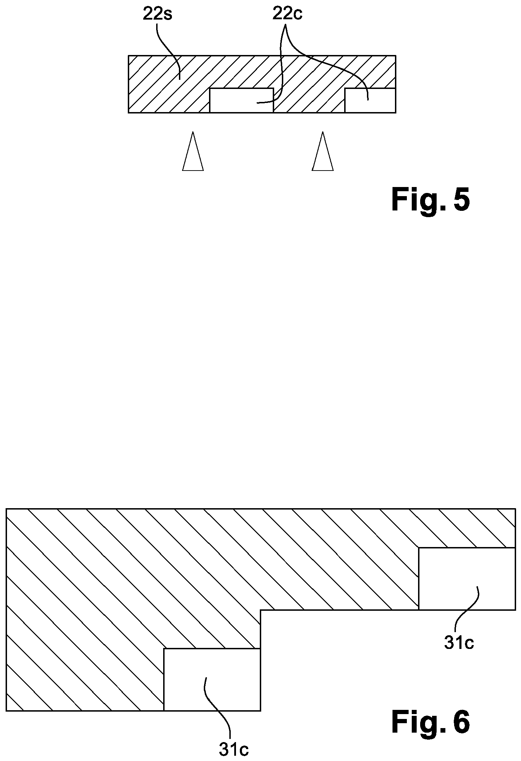

La figure 5 est une variante de réalisation du concept de la figure 3, dans laquelle les cavités 22c, plutôt que d'être situées à la périphérie externe de l'élément d'étanchéité, sont situées à la périphérie interne de cet élément et débouchent radialement vers l'intérieur.

La figure 6 est une variante de réalisation du concept de la figure 2, dans laquelle les cavités 31c, plutôt que de déboucher axialement vers l'aval, débouchent ici radialement vers l'intérieur.

## Revendications

1. Turbine (1) de moteur à turbine à gaz, comprenant un élément d'anneau d'étanchéité statorique (31, 31', 22s) agencé pour former un joint à labyrinthe en association avec au moins une léchette (21l, 20l) mobile en rotation autour de l'axe (A) de l'anneau d'étanchéité, l'élément (31, 31', 22s) comprenant une couche en matériau abradable avec une portion de surface d'étanchéité (31p, 31'p, 22s') apte à coopérer avec ladite léchette mobile (21l, 20l), la couche de matériau abradable sur ladite portion de surface (31p, 31'p, 22s') comprenant axialement une première zone (31p1, 31'p1, 22s1) avec une première résistance à la pénétration d'une léchette (20l, 21l), et une deuxième zone (31p2, 31'p2, 22s2) adjacente à la première zone (31pl, 31'pl, 22sl) avec une résistance à la pénétration d'une léchette réduite par rapport à la première zone, **caractérisée en ce que**
ladite première zone (31p1, 31'p1, 22s1) correspond à la position axiale de la léchette (21l, 20l) en fonctionnement nominal de la turbine, et ladite deuxième zone (31p2, 31'p2, 22s2)étant située en aval par rapport à la première zone (31p1, 31'p1, 22s1) et correspondant à la position axiale que prend la léchette (21l, 20l) lorsqu'il se produit une extinction de flamme dans la chambre de combustion du moteur.

2. Turbine(1) selon la revendication 1, **caractérisée en ce que** ladite deuxième zone (31p2, 31'p2, 22s2) comprend au moins une cavité (31c, 31'p2, 22c).

3. Turbine(1) selon la revendication 1 ou 2, **caractérisée en ce que** le rayon de ladite portion de surface (31p, 31'p, 22s') est constant le long des deux zones, et **en ce que** dans ladite deuxième zone (31p2, 31'p2, 22s2), adjacente à la première (31p1, 31'p1, 22s1), l'épaisseur de la couche abradable est réduite par rapport à la première zone.

4. Turbine (1) selon l'une des revendications 1 à 3, **caractérisée en ce que** l'épaisseur de la couche abradable dans la deuxième zone (31p2, 31'p2, 22s2) est réduite à 50-95% de l'épaisseur dans la première zone.

5. Turbine (1) selon la revendication 4, **caractérisée en ce que** la zone d'épaisseur réduite est comblée d'un matériau de résistance plus faible.

6. Turbine (1) selon la revendication 1, **caractérisée en ce que** la portion de surface le long de la première zone est cylindrique et tronconique le long de la deuxième zone.

7. Turbine (1) selon l'une des revendications précédentes, **caractérisée en ce que** l'élément d'anneau d'étanchéité statorique (31, 31', 22s) est agencé pour former un joint à labyrinthe en extrémité radiale extérieure des aubes mobiles (21a) de la turbine.

8. Turbine (1) selon l'une des revendications 1 à 6, **caractérisée en ce que** l'élément d'anneau d'étanchéité statorique (31, 31', 22s) est agencé pour former un joint à labyrinthe en extrémité radiale intérieure des aubes statoriques (22) de la turbine.

9. Turbine (1) selon la revendication 1, comportant un rotor et un stator, le rotor comprenant une pluralité d'aubes radiales (21a) pourvues à leur extrémité radialement extérieure d'un élément d'étanchéité rotorique avec au moins une léchette (21l) en forme de lame radiale, orientée radialement vers l'extérieur par rapport à l'axe (A) de rotation du rotor, le stator (30) formant l'enveloppe cylindrique à l'intérieur de laquelle les aubes du rotor sont mises en mouvement, le stator comprenant en vis-à-vis de ladite lame, ledit élément d'anneau d'étanchéité statorique (31) réalisé dans un matériau abradable et formant avec l'élément d'étanchéité rotorique (21l) ledit joint d'étanchéité à labyrinthe, ladite première zone (31p1, 31'p1) correspondant au fonctionnement nominal de la turbine et ladite seconde zone (31p2, 31p2) correspondant au fonctionnement en phase de ré-allumage après une extinction de chambre de combustion du moteur.

10. Turbine (1) selon la revendication 1, comprenant un étage formé d'ailettes statoriques (22), les dites ailettes comprenant du côté de l'axe (A) de la turbine ledit élément d'étanchéité (22s) coopérant avec au moins une léchette (20l) mobile en rotation pour former ledit joint à labyrinthe, ladite première zone (22s1) correspondant au fonctionnement nominal de la turbine et ladite seconde zone (22s2) correspondant au fonctionnement en phase de ré-allumage après une extinction de chambre de combustion du moteur.

11. Moteur à turbine à gaz, **caractérisé en ce qu'**il comprend une turbine (1) selon l'une des revendications 1 à 10.

12. Turbomachine, **caractérisée en ce qu'**elle comprend un moteur à turbine à gaz selon la revendication 11.

## Patentansprüche

1. Turbine (1) eines Gasturbinenmaschine, umfassend ein Stator-Dichtungsringelement (31, 31', 22s), das so angeordnet ist, dass es eine Labyrinthdichtung in Verbindung mit mindestens einer Lippe (211, 201) bildet, die um die Achse (A) des Dichtungsrings drehbeweglich ist, wobei das Element (31, 31', 22s) eine Schicht aus einem abreibbaren Material mit einem Dichtungsoberflächenabschnitt (31p, 31'p, 22s') umfasst, der dazu geeignet ist, mit der beweglichen Lippe (211, 201) zusammenzuwirken, wobei die abreibbare Materialschicht auf dem Oberflächenabschnitt (31p, 31'p, 22s') axial einen ersten Bereich (31p1, 31'p1, 22s1) mit einem ersten Widerstand gegenüber dem Eindringen einer Lippe (201, 211) und einen zweiten Bereich (31p2, 31'p2, 22s2) benachbart zum ersten Bereich (31p1, 31'p1, 22s1) mit einem Widerstand gegenüber dem Eindringen einer Lippe umfasst, der im Vergleich zum ersten Bereich kleiner ist, **dadurch gekennzeichnet, dass**
der erste Bereich (31p1, 31'p1, 22s1) der axialen Position der Lippe (211, 201) im Nennbetrieb der Turbine entspricht und sich der zweite Bereich (31p2, 31'p2, 22s2) stromabwärts in Bezug auf den ersten Bereich (31p1, 31'p1, 22s1) befindet und der axialen Position entspricht, die die Lippe (211, 201) einnimmt, wenn in der Brennkammer des Triebwerks ein Löschen einer Flamme erfolgt.

2. Turbine (1) nach Anspruch 1, **dadurch gekennzeichnet, dass** der zweite Bereich (31p2, 31'p2, 22s2) mindestens einen Hohlraum (31c, 31'p2, 22c) umfasst.

3. Turbine (1) nach Anspruch 1 oder 2, **dadurch gekennzeichnet, dass** der Radius des Oberflächenabschnitts (31p, 31'p, 22s') entlang der zwei Bereiche konstant ist und dass in dem zweiten Bereich (31p2, 31'p2, 22s2), benachbart zum ersten (31p1, 31'p1, 22s1), die Dicke der abreibbaren Schicht im Vergleich zum ersten Bereich verringert ist.

4. Turbine (1) nach einem der Ansprüche 1 bis 3, **dadurch gekennzeichnet, dass** die Dicke der abreibbaren Schicht im zweiten Bereich (31p2, 31'p2, 22s2) auf 50-95 % der Dicke im ersten Bereich verringert ist.

5. Turbine (1) nach Anspruch 4, **dadurch gekennzeichnet, dass** der Bereich mit verringerter Dicke mit einem Material mit geringerem Widerstand gefüllt ist.

6. Turbine (1) nach Anspruch 1, **dadurch gekennzeichnet, dass** der Oberflächenabschnitt entlang des ersten Bereichs zylindrisch und kegelstumpfartig entlang des zweiten Bereichs ist.

7. Turbine (1) nach einem der vorstehenden Ansprüche, **dadurch gekennzeichnet, dass** das Stator-Dichtungsringelement (31, 31', 22s) so angeordnet ist, dass es eine Labyrinthdichtung am radialen äußeren Ende der beweglichen Schaufeln (21a) der Turbine bildet.

8. Turbine (1) nach einem der Ansprüche 1 bis 6, **dadurch gekennzeichnet, dass** das Stator-Dichtungsringelement (31, 31', 22s) so angeordnet ist, dass es eine Labyrinthdichtung am radialen inneren Ende der Statorschaufeln (22) der Turbine bildet.

9. Turbine (1) nach Anspruch 1, umfassend einen Rotor und einen Stator, wobei der Rotor eine Vielzahl von radialen Schaufeln (21a) umfasst, die an ihrem radial äußeren Ende mit einem Rotor-Dichtungselement mit mindestens einer Lippe (211) in Form einer radialen Lamelle versehen sind, die radial nach außen in Bezug auf die Achse (A) der Rotordrehung ausgerichtet ist, wobei der Stator (30) den zylindrischen Mantel bildet, in dessen Inneren die Rotorschaufeln in Bewegung versetzt werden, wobei der Stator gegenüber der Lamelle das Stator-Dichtungsringelement (31) umfasst, welches aus einem abreibbaren Material gefertigt ist und mit dem Rotor-Dichtungselement (211) die Labyrinthdichtung bildet, wobei der erste Bereich (31p1, 31'p1) dem Nennbetrieb der Turbine entspricht und der zweite Bereich (31p2, 31p2) dem Betrieb in einer erneuten Zündphase nach einem Brennkammerlöschen des Triebwerks entspricht.

10. Turbine (1) nach Anspruch 1, umfassend eine Stufe, die aus Statorflügeln (22) gebildet ist, wobei die Flügel auf der Seite der Achse (A) der Turbine das Dichtungselement (22s) umfassen, das mit mindestens einer Lippe (201) zusammenwirkt, die drehbeweglich ist, um die Labyrinthdichtung zu bilden, wobei der erste Bereich (22s1) dem Nennbetrieb der Turbine entspricht und der zweite Bereich (22s2) dem Betrieb in der erneuten Zündphase nach einem Brennkammerlöschen des Triebwerks entspricht.

11. Gasturbinenmaschine, **dadurch gekennzeichnet, dass** es eine Turbine (1) nach einem der Ansprüche 1 bis 10 umfasst.

12. Turbomaschine, **dadurch gekennzeichnet, dass** sie ein Gasturbinenmaschine nach Anspruch 11 umfasst.

## Claims

1. Turbine (1) of a gas turbine engine, comprising a stator sealing ring element (31, 31', 22s) arranged to form a labyrinth seal in conjunction with at least one wiper (211, 201) rotatable around the axis (A) of the sealing ring, said element (31, 31', 22s) comprising a layer of abradable material with a sealing surface portion (31p, 31'p, 22s') capable of interacting with said moving wiper (211, 201), the layer of abradable material on said surface portion (31p, 31'p, 22s') comprising axially a first zone (31p1, 31'p1, 22s1) with a first resistance to penetration of a wiper (201, 211), and a second zone (31p2, 31'p2, 22s2) adjacent to the first zone (31p1, 31'p1, 22s1) with a reduced resistance to penetration of a wiper relative to the first zone, **characterized in that** said first zone (31p1, 31'p1, 22s1) correspond to the axial position of the wiper (211, 201) in nominal operation of the turbine, and said second zone (31p2, 31'p2, 22s2) being located downstream relative to the first zone (31p1, 31'p1, 22s1) and corresponding to the axial position that the wiper (211, 201) assumes when flame extinction occurs in the combustion chamber of the engine.

2. Turbine (1) according to claim 1, **characterized in that** said second zone (31p2, 31'p2, 22s2) comprises at least one cavity (31c, 31'p2, 22c).

3. Turbine (1) according to claim 1 or 2, **characterized in that** the radius of said surface portion (31p, 31'p, 22s') is constant along the two zones, and **in that** in said second zone (31p2, 31'p2, 22s2), adjacent to the first (31p1, 31'p1, 22s1), the thickness of the abradable layer is reduced relative to the first zone.

4. Turbine (1) according to one of claims 1 to 3, **characterized in that** the thickness of the abradable layer in the second zone (31p2, 31'p2, 22s2) is reduced to 50-95% of the thickness in the first zone.

5. Turbine (1) according to claim 4, **characterized in that** the zone with reduced thickness is filled with a material of lower resistance.

6. Turbine (1) according to claim 1, **characterized in that** the surface portion is cylindrical along the first zone and truncated along the second zone.

7. Turbine (1) according to one of the preceding claims, **characterized in that** the stator sealing ring element (31, 31', 22s) is arranged to form a labyrinth seal at the outer radial end of the rotor blades (21a) of the turbine.

8. Turbine (1) according to one of claims 1 to 6, **characterized in that** the stator sealing ring element (31, 31', 22s) is arranged to form a labyrinth seal at the inner radial end of the stator blades (22) of the turbine.

9. Turbine (1) according to claim 1, comprising a rotor and a stator, said rotor comprising a plurality of radial blades (21a) provided at their radially outer end with a rotor sealing element with at least one wiper (211) in the form of a radial strip, oriented radially outwards relative to the rotation axis (A) of the rotor, said stator (30) forming the cylindrical envelope within which the rotor blades are set in motion, the stator comprising, opposite said strip, said stator sealing ring element (31) made of an abradable material and forming said labyrinth seal with the rotor sealing element (211), said first zone (31p1, 31'p1) corresponding to nominal operation of the turbine and said second zone (31p2, 31p2) corresponding to operation in the phase of re-ignition after extinction of the engine's combustion chamber.

10. Turbine (1) according to claim 1, comprising a stage formed from stator fins (22), said fins comprising, on the side of the axis (A) of the turbine, said sealing element (22s) interacting with at least one rotatable wiper (201) to form said labyrinth seal, said first zone (22s1) corresponding to nominal operation of the turbine and said second zone (22s2) corresponding to operation in the phase of re-ignition after extinction of the engine's combustion chamber.

11. Gas turbine engine, **characterized in that** it comprises a turbine (1) according to one of claims 1 to 10.

12. Turbine aero-engine, **characterized in that** it comprises a gas turbine engine according to claim 11.
